# EUROPÄISCHE PATENTANMELDUNG

(11) **EP 1 760 587 A1**
(43) Veröffentlichungstag der Anmeldung: **07.03.2007**
(21) Anmeldenummer: 06026362.1
(22) Anmeldetag: 31.01.2005
(51) Int. Cl.: G06F 9/46, G06F 9/44, G06Q 40/00

(54) **Verfahren zur Steuerung von Softwaremodulen**

(62) Teilanmeldung aus: 05001942.1
(71) Anmelder: UBS AG, 8001 Zürich (CH)
(72) Erfinder: Dünki, Peter, 8004 Zürich (CH); Loacker, Hansbeat, Dr., 8132 Egg (CH); Wietlisbach, Markus, 8125 Zollikerberg (CH)
(74) Vertreter: Jehle, Volker Armin

(57) **Zusammenfassung**

Die Erfindung betrifft ein Verfahren zur Steuerung von datenverarbeitenden Softwaremodulen (4, 5, 6, 7), wobei die zu verarbeitenden Daten in Dateien organisiert sind, und wobei die Verarbeitung in mehreren aufeinander folgenden Verarbeitungsabschnitten stattfindet und die Dateien in einem Verarbeitungsabschnitt von mindestens einem Softwaremodul (4, 5, 6, 7) verarbeitet werden. Um zu verhindern, dass während der Verarbeitung in den Softwaremodulen (4, 5, 6, 7) auftretende Abweichungen sich in nachfolgenden Verarbeitungsabschnitten fortzusetzen und ausbreiten, werden in den Softwaremodulen (4, 5, 6, 7) der Verarbeitungsabschnitte Informationen über die verarbeiteten Daten erfasst und an ein Kontrollsystem (8) signalisiert, welches die signalisierten Informationen vergleicht und die Verarbeitung in einem nachfolgenden Verarbeitungsabschnitt unterbindet, falls bei dem Vergleich der Informationen festgestellt wurde, dass eine vorbestimmte, zulässige maximale Abweichung überschritten wurde.

## Beschreibung

Die Erfindung betrifft ein Verfahren zur Steuerung von datenverarbeitenden Softwaremodulen.

Aus dem Stand der Technik ist bekannt, dass zu bestimmten Tageszeiten auf Großrechnersystemen großer Unternehmen regelmäßig eine große Menge von Daten zu verarbeiten ist. Solche regelmäßig in großen Mengen anfallenden Daten entstehen beispielsweise dann, wenn am Ende eines Geschäftstages in einer so genannten Tagesendverarbeitung die Daten der bis dahin stattgefundenen Geschäftsvorgänge zu verarbeiten sind.

Die bei den einzelnen Geschäftsvorgängen entstehenden Informationen, beispielsweise, - bei einem Industrieunternehmen - wer zu einem bestimmten Zeitpunkt etwas von wem für einen bestimmten Betrag erworben, oder - bei einer Bank - wer zu einem bestimmten Zeitpunkt eine Überweisung über einen bestimmten Betrag vorgenommen hat oder einen anderen Geschäftsvorgang getätigt hat, sind dabei üblicherweise in so genannten Feldern gespeichert. Alle Felder, die Informationen zu einem bestimmten Geschäftsvorgang enthalten und die in einer Datei gespeichert sind, werden dabei üblicherweise in einer vorbestimmten Reihenfolge hintereinander in der Datei abgelegt und bilden einen so genannten Datensatz bzw. Record. Die Datensätze werden dann in einer Datei gesammelt, die nach einer gewissen Zeit die Daten zu den seit Beginn der Aufzeichnung, beispielsweise für einen Tag oder Tagesabschnitt, stattgefundenen Geschäftsvorgängen enthält.

Die Verarbeitung einer solchen Datei kann beispielsweise die Durchführung der für den Geschäftsvorgang notwendigen Buchungsvorgänge oder die Pflege eines Datenbestandes sein, die von einem weiteren System zu verarbeiten sind. Die Verarbeitung findet dabei üblicherweise nicht oder nicht ausschließlich auf den Rechnern statt, auf denen die Dateien entstehen, die Daten also gesammelt werden. Stattdessen werden die Dateien zur Verarbeitung auf einen zentralen Rechner transferiert, auf dem die in vielen gleichartigen Systemen entstandenen Dateien gesammelt und zentral verarbeitet werden.

Eine solche zentralisierte Verarbeitung weist die für zentralisierte Systeme üblichen Vorteile auf. Hinsichtlich der Softwarearchitektur geht man in jüngerer Zeit von sogenannten monolithischen System, in denen ein großes Programm die gesamte zur Verarbeitung notwendige Funktionalität besitzt und damit alle Schritte der Verarbeitung ausführen kann, auf eine modulare Softwarearchitektur, so genannte verteilte Systeme, über. Die zur Verarbeitung der Daten notwendige Funktionalität ist dabei auf eine Anzahl kleinerer und miteinander kommunizierender Softwaremodule aufgeteilt. Die Kommunikation der Softwaremodule untereinander kann dabei so gestaltet sein, dass ein erstes Softwaremodul eine erste Anzahl von Arbeitsschritten für jeden Datensatz einer Eingangsdatei abarbeitet und jeweils einen Ausgangsdatensatz erzeugt, der in einer Ausgangsdatei gespeichert wird. Diese Ausgangsdatei des ersten Softwaremoduls dient als Eingangsdatei eines weiteren Softwaremoduls, so dass in einer Kette solcher Softwaremodule jeweils eine Datei von einem Softwaremodul erzeugt und einem weiteren zur weiteren Verarbeitung zur Verfügung gestellt wird. Diese rudimentäre Art der Kommunikation von Softwaremodulen eignet sich insbesondere darin, wenn im Normalfall die Verarbeitung einer großen Anzahl von Datensätzen gleichen Aufbaus nach einem festen Schema abläuft.

Gegenüber einem monolithischen System hat ein solches modulares System eine Reihe von Vorteilen. So können einzelne Softwaremodule einer solche Kette einfach ausgetauscht werden, die einzelnen Softwaremodule sind einfacher zu ändem, und es können auf Grund der fest definierten Schnittstellen zwischen den Modulen neue Module in das System eingefügt werden oder ersetzt werden.

Solche modularen Systeme, in denen eine Vielzahl von Datensätzen zu einem bestimmten Zeitpunkt in Form solcher Dateien anfallen sind dafür ausgelegt, die Datensätze innerhalb kurzer Zeit zu verarbeiten. Insbesondere besteht häufig die Notwendigkeit, die im Laufe eines Geschäftstages gesammelten Datensätze innerhalb eines vorgegebenen Zeitfensters zu verarbeiten, um sicherzustellen, dass beispielsweise bestimmte Buchungsvorgänge am selben Geschäftstag abgeschlossen werden. Eine Prüfung der Datensätze auf mögliche Inkonsistenzen in den Datensätzen, die eventuell erst in späteren Verarbeitungsabschnitten auffallen oder Fehler verursachen, kann von dem ersten verarbeitenden Softwaremodul nicht geleistet werden, da dieses dann alle für die weitere Verarbeitung notwendigen Kriterien prüfen müsste. Dazu müsste die gesamte Verarbeitung in dem prüfenden Eingangssoftwaremodul nachgebildet werden. Dies würde zum Einen dem Prinzip des modularen Systems widersprechen, zum Anderen hat die Praxis gezeigt, dass ein solches Prüfmodul ebenso fehlerbehaftet sein kann und eine nahezu unübersehbare Menge möglicher Kombinationen von Informationen prüfen müsste. Auch müsste jede Änderung eines Softwaremoduls in dem Prüfprogramm nachgepflegt werden. Eine vollständige Prüfung der Datensätze zu Beginn der Verarbeitung ist damit nahezu unmöglich. Somit kann in der täglichen Praxis nicht ausgeschlossen werden, dass Inkonsistenzen und Fehler bei der Verarbeitung der Daten in den einzelnen Softwaremodulen auftreten.

Dies führt dazu, dass Fehler und Inkonsistenzen in den Datensätzen möglicherweise nicht von dem ersten der in der Kette der verarbeitenden Softwaremodule, sondern erst in einem weiteren, später ablaufenden Softwaremodul erkannt werden, so dass der Fehler möglicherweise bereits Folgefehler in anderen, verbundenen Systemen bewirkt hat. Falls ein Softwaremodul eine Datei erzeugt, die anschließend von mehreren Softwaremodulen verarbeitet wird, oder mehrere Dateien für mehrere nachverarbeitende Softwaremodule generiert, so wird der Fehler vervielfacht. Die Verfolgung und die Behebung eines solchen Fehlers muss dann an allen betroffenen Stellen des Systems stattfinden. Die möglichst frühe Erkennung und Eingrenzung eines Fehlers auf einen bestimmten Datensatz oder eine Gruppe von korrelierten Datensätzen ist somit sinnvoll, so dass die Verarbeitung eines fehlerbehafteten Datensatzes möglichst früh angehalten und eine Fortpflanzung und Ausbreitung des Fehlers in andere Systeme verhindert werden kann. Für die Korrelation zwischen den Datensätzen können verschiedene Kriterien ausgenutzt werden. So sind beispielsweise alle Datensätze miteinander korreliert, die in einer bestimmten Geschäftsstelle erfasst wurden oder die eine bestimmte Art eines Geschäftsvorgangs betreffen.

Aufgabe der Erfindung ist es damit, ein Verfahren vorzuschlagen, das eine frühe Erkennung von fehlerbehafteten oder inkonsistenten Datensätzen ermöglicht und die Ausbreitung von Fehlern verhindert.
Diese Aufgabe wird bei einem Verfahren zur Steuerung von datenverarbeitenden Computerprozessen, wobei die Verarbeitung in mehreren aufeinander folgenden Verarbeitungsabschnitten stattfindet und wobei die Daten in einem Verarbeitungsabschnitt jeweils von mindestens einem Softwaremodul verarbeitet werden, dadurch gelöst, dass in dem mindestens einen Softwaremodul eines Verarbeitungsabschnitts Informationen über die verarbeiteten Daten erfasst und an ein Kontrollsystem signalisiert werden, und dass das Kontrollsystem die von den Softwaremodulen der verschiedenen Verarbeitungsabschnitte signalisierten Informationen vergleicht und die Verarbeitung der Daten in einem nachfolgenden Verarbeitungsabschnitt unterbindet, wenn das Überschreiten einer vorbestimmten zulässigen maximalen Abweichung festgestellt wurde.

Vorteilhafte Weiterbildungen der Erfindung sind in den Unteransprüchen angegeben.Bevorzugt erfassen die Softwaremodule einer Verarbeitungsstufe während der Verarbeitung der Datensätze Informationen über die verarbeiteten Datensätze, beispielsweise die Anzahl der verarbeiteten Datensätze, die über ein gemeinsames Merkmal korreliert sind. Die gesammelten Informationen über die verarbeitenden Datensätze werden von den zu einem Verarbeitungsabschnitt gehörenden Softwaremodul jeweils an ein Kontrollsystem signalisiert, sobald es alle Eingangsdatensätze verarbeitet hat, die das Korrelationskriterium erfüllen. Dem Kontrollsystem werden damit von den verschiedenen Softwaremodulen eines jeweiligen Verarbeitungsabschnitts Informationen über die verarbeiteten Datensätze geliefert. Das Kontrollsystem vergleicht dann die zu bestimmten Kriterien in den verarbeitenden Softwaremodulen gesammelten Informationen darauf, ob diese übereinstimmen oder zueinander passen oder ob eine vorgegebene zulässige maximale Abweichung überschritten wurde. Falls die vorbestimmte Abweichung unterschritten bleibt oder gerade erreicht ist, so wird die Verarbeitung der entsprechenden Daten in den Softwaremodulen des nachfolgenden Verarbeitungsabschnitts zugelassen beziehungsweise es wird die Verarbeitung in dem nachfolgenden Verarbeitungsabschnitt angestoßen.

Anderenfalls, wenn also die vordefinierte zulässige maximale Abweichung überschritten wurde, so wird die Verarbeitung der entsprechenden Daten in den nachfolgenden Verarbeitungsabschnitten nicht zugelassen, so dass eine Fortpflanzung der Inkonsistenzen in den nachfolgenden Verarbeitungsabschnitten verhindert wird. Eine Fehlerbehebung dahingehend, dass die Ursache für die festgestellten Abweichungen gesucht, gefunden und behoben wird und die Daten oder möglicherweise auch die Softwaremodule eines Verarbeitungsabschnitts geändert werden, findet - durch das vorliegende System bzw. Verfahren - nicht bzw. nicht automatisch statt. Das System ist vielmehr darauf ausgelegt, die angelieferten Daten innerhalb des üblicherweise kurzen Zeitraums zu bearbeiten, so dass auftretende Inkonsistenzen nicht in den Softwaremodulen, sondern durch Eingriffe des Bedienpersonals behoben werden. Das Verfahren dient damit nur zur Erkennung von Inkonsistenzen zwischen korrelierten Datensätzen bzw. Fehlern in der Verarbeitung der Datensätze in an sich unabhängigen Verarbeitungsabschnitten und zur Verhinderung von deren Ausbreitung in nachfolgende Verarbeitungsabschnitte. Sonstige Fehler, die innerhalb eines bestimmten Verarbeitungsabschnitts von diesem selbst erkannt werden, sind nicht Gegenstand des vorliegenden Systems und Verfahrens, und können ggf. durch den Verarbeitungsabschnitt selbst korrigiert werden.

Die in den Verarbeitungsabschnitten zu verarbeitenden Daten können dabei auch so organisiert sein, dass sie in mehreren Dateien abgelegt sind, wobei die Informationen in den Dateien miteinander korreliert sind. Beispielsweise können so die zu einem Geschäftsvorgang gehörenden Daten auf zwei oder mehr Dateien aufgeteilt sein. In einem Verarbeitungsabschnitt können diese Dateien von verschiedenen Softwaremodulen unterschiedlicher Funktion verarbeitet werden. Dabei können diese gleichzeitig auf einem Rechnersystem ablaufen, so dass auch die Verarbeitung der Dateien zeitgleich stattfindet. Eine solche Aufteilung der Funktionalität eines Verarbeitungsabschnitts auf mehrere gleichzeitig ablaufende kleinere Softwaremodule an Stelle eines großen Programms erlaubt erfahrungsgemäß eine günstigere Ausnutzung der Computerressourcen, so dass damit die Verarbeitung beschleunigt werden kann.

Das Kontrollsystem kann in vorteilhafter Weise auch dadurch weitergebildet sein, dass beim Überschreiten der vorbestimmten zulässige maximalen Abweichung ein für das Bedienpersonal des Systems wahmehmbares optisches und / oder akustisches Signal ausgelöst wird, so dass das Bedienpersonal auf das Überschreiten der zulässige maximalen Abweichungen hingewiesen wird.

Weiterhin kann das Verfahren so ausgestaltet sein, dass die weitere Verarbeitung der Daten nur für den Teil des nachfolgenden Verarbeitungsabschnitts unterbunden wird, in dem die ermittelte Inkonsistenz tatsächlich einen Folgefehler bewirken würde. Die Verarbeitung der Daten kann jedoch für diejenigen nachfolgenden Verarbeitungsabschnitte freigegeben werden, in denen kein Folgefehler bewirkt wird. Somit kann in vorteilhafter Weise eine Freigabe der Daten für die Verarbeitung in denjenigen Teilen der nachfolgenden Verarbeitungsabschnitte erfolgen, für die die festgestellte Abweichung ohne Bedeutung ist.

Das Verfahren kann in vorteilhafter Weise auch dadurch weitergebildet sein, dass in den Softwaremodulen eines Verarbeitungsabschnitts eine bankfachlich gebildete Kennzahl, insbesondere Summe ermittelt und an das Kontrollsystem signalisiert wird und die zulässige maximale Abweichung auf diese Kennzahl, insbesondere Summe bezogen ist. Eine solche bankfachlich gebildete Kennzahl, insbesondere Summe ist beispielsweise die Summe aller Beträge der zu einer Gruppe von Datensätzen gehörenden Geschäftsvorgänge bzw. Transaktionen. Eine Gruppierung von Datensätzen kann beispielsweise dadurch erfolgen, dass die Summe für alle Datensätze einer Datei oder nur für einen Teil der Datensätze gebildet wird, die jedoch durch ein Kriterium von anderen Datensätzen abgegrenzt werden können, so dass in allen Fällen ein auf eine Gruppe von Datensätzen bezogener Vergleich stattfinden kann.

Die für eine solche bankfachlich gebildete Kennzahl, insbesondere Summe zulässige maximale Abweichung kann in vorteilhafter Weise als relative Abweichung festgelegt werden. Werden beispielsweise in mehreren Softwaremodulen mathematische Berechnungen der Kennzahlen, insbesondere Summen vorgenommen, wie beispielsweise Umrechnungen in andere Währungen oder andere mathematische Berechnungen, so können sich Rundungsfehler ergeben, die sich addieren können. So kann beispielsweise vorbestimmt werden, dass die zulässige maximale Abweichung zweier auf korrelierte Datensätze bezogener bankfachlich gebildeter Kennzahlen, insbesondere Summen eine zulässige maximale Abweichung von 0,1 % bezogen auf einen der beiden Werte haben darf. Bleibt die ermittelte Abweichung der signalisierten Werte unterhalb dieses Wertes, so wird die Abweichung als nahezu unvermeidlicher Rundungsfehler und damit nicht als Fehler eingestuft und die bezogenen Daten können zur weiteren Verarbeitung in nachfolgenden Verarbeitungsabschnitten freigegeben werden.

Es kann jedoch auch vorteilhaft sein, die für eine bankfachlich gebildete Kennzahl, insbesondere Summe zulässige maximale Abweichung als Absolutwert festzulegen. Rundungs- und andere durch mathematische Operationen begründete Fehler sind erfahrungsgemäß sehr klein. Auch wenn die absoluten Summen vergleichsweise groß sind, treten solche Fehler üblicherweise weit hinter dem Komma auf, so dass auch die Summe der Abweichungen in der Summe klein sein müssen. So kann beispielsweise ein Betrag von einem Euro oder einem Schweizer Franken oder einer anderen Währung als zulässige maximale Abweichung festgelegt werden.

Weiterhin kann als ein möglicher Kontrollwert die Anzahl bestimmter durchgeführter Verarbeitungsschritte in den Softwaremodulen ermittelt werden. Falls beispielsweise in einer Eingangsdatei eines Verarbeitungsabschnitts eine Anzahl von Datensätzen einen bestimmten Geschäftsvorgang beschreibt, beispielsweise einen Kauf oder eine Umbuchung, und wird diese Datei von zwei Softwaremodulen verarbeitet, so müssen beide Softwaremodule dieselbe Anzahl dieser Geschäftsvorgänge an das Kontrollsystem signalisieren. Falls bei dem Vergleich der jeweils signalisierten Anzahl der Geschäftsvorgänge eine Abweichung festgestellt wird, so liegt ein schwerer Fehler vor, der verschiedene Ursachen haben kann.

In einer weiteren Variante kann das System so ausgebildet sein, dass die von einem Prozess eines gestarteten Softwaremoduls bis zum Ende des Prozesslaufs verbrauchte Zeit als Kontrollwert erfasst und an das Kontrollsystem signalisiert wird, insbesondere die Zeitdauer zwischen Beginn und Ende des Prozesslaufs.

Das Kontrollsystem vergleicht dann die gemessene Zeit mit einem vorgegebenen Erfahrungswert und reagiert entsprechend.

Als Erfahrungswert kann z.B. ein statistisch bereinigter Mittelwert der Prozesslaufzeiten aus einer Beobachtungsperiode, z.B. mehrere Tage und/oder eine oder mehrere Wochen verwendet werden. Dieser kann automatisch durch das Kontrollsystem periodisch neu ermittelt werden.

Das Verfahren kann auch so ausgebildet sein, dass eine an eine Verarbeitungsabschnitt übergebene Eingangsdatei zu Beginn der Verarbeitung in diesem Abschnitt nach vorherbestimmten Kriterien in mehrere und entsprechend kleinere Dateien aufgeteilt wird. Eine solche Aufteilung bietet sich an, wenn die Softwarearchitektur die zeitgleiche Verarbeitung mehrerer gleichartiger Dateien erlaubt, wie es auf Großrechnersystemen nach dem Stand der Technik prinzipiell möglich ist. Eine Aufteilung einer großen Eingangsdatei in mehrere kleine Dateien erlaubt dann die Verarbeitung jeder kleineren Datei durch einen Prozess eines Softwaremoduls. Erfahrungsgemäß ist es in der Summe günstiger eine große Datei in kleinere aufzuteilen, um diese dann von mehreren Prozessen des gleichen Softwaremoduls verarbeiten zu lassen. Obwohl das Betriebssystem und damit das Rechnersystem durch die damit verbundene Verwaltung der größeren Anzahl von Prozessen stärker belastet wird, ist dieses Verfahren vorteilhaft und schneller als die Abarbeitung einer großen Datei durch einen Prozess, da die mehreren Prozesse die in einem Großrechnersystem zur Verfügung stehenden Ressourcen in der Summe besser ausnutzen. Damit kann das Verfahren auch so weitergebildet sein, dass die mehreren Dateien zeitgleich von jeweils einem Prozess eines Softwaremoduls verarbeitet werden.

Weiterhin kann das Verfahren auch so ausgestaltet sein, dass die Softwaremodule der Verarbeitungsabschnitte von einem permanent laufenden Scheduler-Programm gestartet werden, dem von den gestarteten Prozessen der Softwaremodule am Ende ihres Laufs eine Information über den Erfolg der Verarbeitung signalisiert wird, und dass das Scheduler-Programm die Softwaremodule des folgenden Verarbeitungsabschnitts nur startet, falls das gestartete Softwaremodul den Erfolg der Verarbeitung signalisiert und bei der Prüfung der an das Kontrollsystem signalisierten Kontrollwerte nicht das Überschreiten der zulässigen maximalen Abweichung festgestellt wurde. Das Scheduler-Programm wird eingesetzt, um zu bestimmten Tageszeiten bestimmte Softwaremodule zu starten. Die gestarteten Softwaremodule verarbeiten dann ihre jeweiligen Daten und melden am Ende ihres Laufs, über einen so genannten Return-Code, den Erfolg der Verarbeitung an das Scheduler-Programm. Signalisiert ein Softwaremodul den Erfolg der Verarbeitung, so startet das Scheduler-Programm die Softwaremodule des nächsten Verarbeitungsabschnitts. Anderenfalls, wenn also das Softwaremodul die Verarbeitung mit dem Fehlerstatus abgebrochen oder beendet hat, unterbleibt das Starten der Softwaremodule des nächsten Verarbeitungsabschnitts. Wird ein Prozess eines Softwaremodul auf Grund der an das Kontrollsystem gemeldeten Kontrollwerte in seinem Lauf unterbrochen, so endet dieser in einem Fehlerstatus. Das Scheduler-Programm startet daraufhin nicht die Softwaremodule des nächsten Verarbeitungsabschnitts und bricht damit die Verarbeitung der Daten ab.

Im Folgenden wird das erfindungsgemäße Verfahren anhand zweier Figuren beschrieben.
- Fig. 1: zeigt ein vereinfachtes Blockschaltbild des Steuerungsverfahrens
- Fig. 2: zeigt ein Blockschaltbild eines solchen Steuerungssystems am Beispiel eines Großrechnersystems einer Bank.

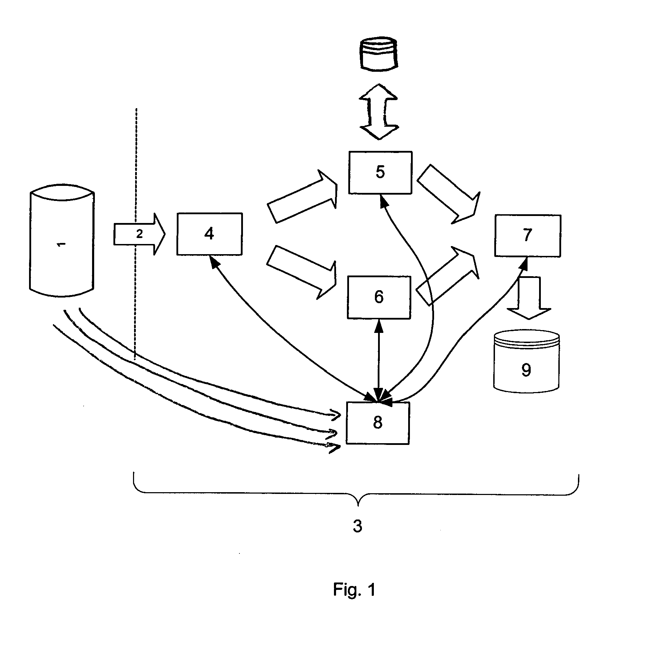

Das Blockschaltbild der Figur 1 zeigt ein System 1, welches Daten generiert bzw. die bei Geschäftsvorgängen im Laufe eines Tages anfallenden Daten sammelt und über den hier schematisch dargestellten Transferkanal 2 Daten an das Großrechnersystem 3 liefert. Die Daten werden in Form von Dateien über ein hier nebensächliches Datentransferverfahren an das System 3 geliefert, das die übertragenen Daten weiter verarbeitet. Die Verarbeitung der Daten in dem System 3 findet mit Hilfe der Softwaremodule 4 bis 7 statt, die in drei Verarbeitungsabschnitte gegliedert sind. Das Softwaremodul 4 bildet den ersten Verarbeitungsabschnitt und liefert Daten, die auch in Form von Dateien vorliegen, an die Softwaremodule 5 und 6, diese wiederum verarbeiten die angelieferten Dateien und beliefern das Softwaremodul 7 mit einer zu verarbeitenden Eingangsdatei. Das Softwaremodul 7 bildet den letzten Verarbeitungsabschnitt des Systems 3 und pflegt die Daten schließlich in eine Datenbank 9 ein. Die Softwaremodule 4 bis 7 sammeln während der Verarbeitung nach bestimmten Kriterien Informationen über die verarbeiteten Daten, beispielsweise die Anzahl der verarbeiteten Datensätze und kommunizieren mit dem Kontrollsystem 8 in der Weise, dass sie die gesammelten Informationen - die Kontrolldaten - an das Kontrollsystem 8 signalisieren. Dieses verarbeitet nicht die von dem System 1 gelieferten (Nutz-)Daten, sondern nur die von den Softwaremodulen der verschiedenen Verarbeitungsabschnitte, und ggf. vom System 1 gelieferten Kontrolldaten. In diesem Beispiel wird angenommen, dass jedes der Softwaremodule 4 bis 7 für jeden Datensatz, der vom ersten System 1 an das zweite System 3 geliefert wurde, einen Datensatz erhalten soll, so dass alle Softwaremodule die gleiche Anzahl von Datensätzen erhalten. Sobald ein Softwaremodul die jeweilige Eingangsdatei abgearbeitet hat, liefert es die Anzahl der insgesamt verarbeiteten Datensätze an das Kontrollsystem 8, welches auf diese Weise von allen Softwaremodulen 4 bis 7 die Anzahl der jeweils abgearbeiteten Datensätze mitgeteilt bekommt. Das Kontrollsystem 8 vergleicht am Ende eines Verarbeitungsabschnitts die von den Softwaremodulen dieses Abschnitts signalisierten Kontrollwerte und gibt die Verarbeitung der Daten für den nächsten Verarbeitungsabschnitt frei, sofern die signalisierten Anzahlen der verarbeiteten Datensätze übereinstimmen bzw. die zulässige maximale Abweichung nicht überschritten wurde. Nachdem die Softwaremodule 5 und 6 die jeweiligen Eingangsdateien vollständig abgearbeitet haben und jeweils eine Datei zur weiteren Verarbeitung im nächsten Verarbeitungsabschnitt, nämlich durch das Softwaremodul 7, generiert haben, signalisieren die Softwaremodule 5 und 6 die jeweils ermittelte Anzahl der verarbeiteten Datensätze an das Softwaremodul 8. Falls die signalisierten Werte übereinstimmen, werden die Dateien zur weiteren Verarbeitung durch das Softwaremodul 7 freigegeben. Anderenfalls, wenn also die signalisierten Zahlenwerten voneinander abweichen, wird die Verarbeitung der Daten beendet und es wird beispielsweise die Ursache der Abweichung über geeignete Maßnahmen ermittelt und behoben. Anschließend wird die Verarbeitung der korrigierten Daten fortgesetzt. Während des Ermittelns und Behebens der Abweichungen steht das System 3 für die Verarbeitung anderer an das System übertragener Daten zur Verfügung. Auf diese Weise wirkt das Kontrollsystem 8 wie eine Schleuse und entscheidet in Abhängigkeit der signalisierten Kontrollwerte, ob die in einem Verarbeitungsabschnitt zuletzt verarbeiteten Daten zur weiteren Verarbeitung im darauffolgenden Verarbeitungsabschnitt freizugeben sind.

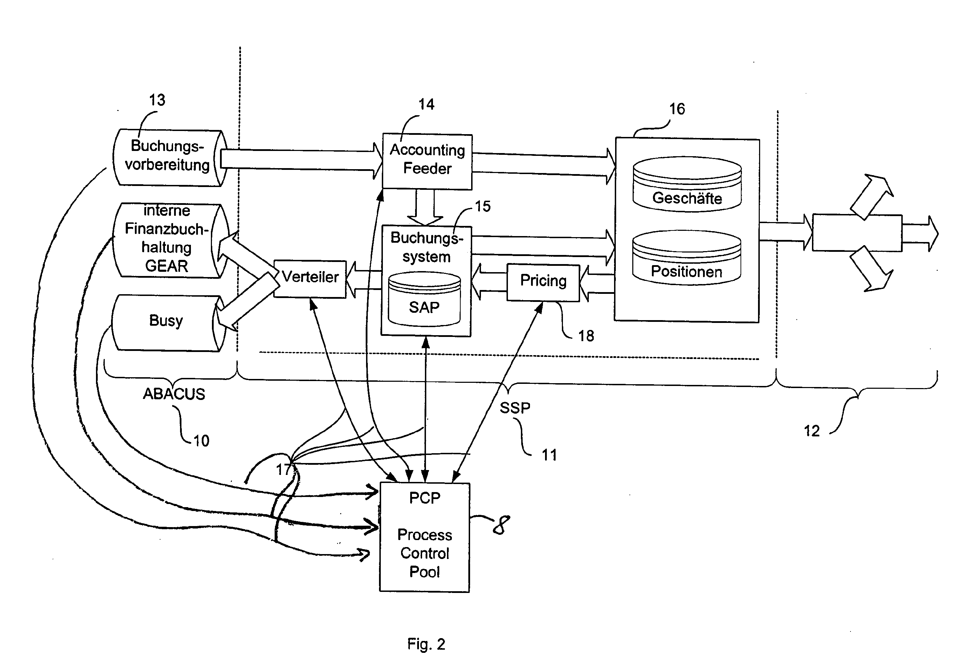

Nachfolgend wird das Verfahren anhand eines Ausschnitts aus der Tagesendverarebeitung eines Großrechnersystems einer Bank konkreter beschrieben. Figur 2 zeigt einen Verbund von drei Großrechnersystemen, deren Grenzen zueinander durch gestrichelte Linien angedeutet sind. Dies sind das so genannte ABACUS System 10, das SSP System 11 und ein nicht näher bezeichnetes drittes System 12, welches von dem SSP System 11 Daten erhält. Weiterhin ist das Kontrollsystem PCP (Process Control Pool) 8 dargestellt, das auf dem gleichen Großrechner wie das SSP 11 oder auf einem externen Rechner betrieben werden kann. Das Kontrollsystem PCP 8 ist eine Softwareanwendung, die auf dem SSP System 11 oder einem hiervon getrennten, externen Computersystem laufen kann und welches von Bedienpersonal bedient und überwacht wird.

Der Fluss der zu verarbeitenden Daten zwischen den Softwaremodulen ist in diesem Blockschaltbild durch die dicken Pfeile angegeben.

Die auf dem ABACUS System 10 laufende Buchungsvorbereitung 13 sammelt die an einem Geschäftstag entstandenen Daten. Diese Daten werden in Dateien gesammelt. Informationen zu einem Geschäftsvorgang werden in einem Datensatz erfasst, der beispielsweise die Information über die Art des Geschäftsvorgangs, den Wert und die Geschäftsstelle, an der der Geschäftsvorgang erstmalig erfasst wurde, enthält. Eine aus solchen Datensätzen aufgebaute Datei kann dabei Datensätze aus verschiedenen Geschäftsstellen enthalten, die diese bereits an die Buchungsvorbereitung 13 übermittelt haben.

Die Buchungsvorbereitung 13 transferiert im Rahmen einer Tagesendverarebitung jeweils täglich um 17:00 und um 20:00 Uhr eine Datei auf das SSP System 11, welches die Datensätze weiter verarbeitet und anschließend Daten beispielsweise an das weitere dritte System 12 transferiert.

Das SSP System 11 weist mehrere Softwaremodule auf, die die vom ABACUS System 10 bzw. von der Buchungsvorbereitung 13 transferierten Daten in mehreren Verarbeitungsabschnitten verarbeiten. Jeder Verarbeitungsabschnitt besteht dabei aus mindestens einem Softwaremodul, das über eine Signalisierungsverbindung 17 mit dem Kontrollsystem PCP 8 verbunden ist. Über diese Signalisierungsverbindung 17 kann das jeweilige Softwaremodul Informationen an das Kontrollsystem 8 signalisieren und von diesem Informationen erhalten. Diese Kommunikation zwischen dem Kontrollsystem 8 und den Softwaremodulen, bei der die ausgetauschte Datenmenge sehr klein ist, findet nicht über den Austausch von Dateien, sondern mit Hilfe von betriebssystemintemen Mitteln wie beispielsweise so genannten Pipes oder Ports (bzw. Messages oder Queues) statt, die eine hohe Signalisierungsgeschwindigkeit ermöglichen und von jedem modernen Betriebssystem zur Verfügung gestellt werden. Das Kontrollsystem 8 wertet die von den Softwaremodulen jeweils erfassten Informationen über die durchgeführte Verarbeitung aus und reagiert im Falle des Überschreitens der festgelegten zulässige maximalen Abweichungen entsprechend, nämlich in dem die weitere Verarbeitung der Daten in den Prozessen der Softwaremodule der nachfolgenden Verarbeitungsabschnitte zu unterbinden und somit die Ausbreitung von Fehlern zu verhindern.

Auf dem SSP System 11 werden die Dateien in einem ersten Verarbeitungsabschnitt vom einem ersten Softwaremodul, dem so genannten Accounting Feeder 14, verarbeitet. Dieser Accounting Feeder 14 führt aufgrund der unterschiedlichen Quellen eine Formatwandlung durch, so dass die Daten anschließend in einem für die nachfolgenden Programme einheitlichen, verständlichen Dateiformat vorliegen. Der Accounting Feeder 14 führt diese Formatumwandlung einmal für das Softwaremodul Buchungssystem 15 und einmal für das Softwaremodul Geschäfte/Positionen 16 durch, so dass zwei Formatwandlungen durchgeführt wurden.

Während der Prozesslaufs des Softwaremoduls 14 sammelt dieses Informationen über die verarbeitete Datei. Diese Informationen können nach verschiedenen Kriterien erfasst werden. Beispielsweise kann dies die Anzahl aller Buchungen sein, eine Hash-Totale über eine zu bildende Summe, die je nach Währung gebildet sein kann. Ebenso kann die Anzahl der verschiedenen Geschäftsvorfälle nach Typen gebildet sein, beispielsweise die Anzahl der Cash-Buchungen, der Börsen-Geschäftsvorgänge, der bloßen Info-Geschäftsvorgänge oder der Pricing-Geschäftsvorgänge.

In diesem Beispiel sei im Folgenden angenommen, dass die Information über die verarbeiteten Datensätze die Anzahl der insgesamt verarbeiteten Datensätze und die Summe der Beträge aller Überweisungen in das Ausland ist. Diese Informationen signalisiert das Softwaremodul Accounting Feeder 14 an das Kontrollsystem PCP 8.

Sofern der Prozess des Softwaremoduls 14 seinen Lauf nicht mit einer Fehlermeldung abschließt, kann nun in dem nächsten Verarbeitungsabschnitt die Verarbeitung der an das Softwaremodul Geschäfte/Positionen 16 gelieferten Datei erfolgen. Dieses pflegt die Daten in die Datenbanken ein und erstellt eine Ausgangsdatei. Während seines Laufs hat das Softwaremodul Geschäfte/Positionen 16 Informationen nach den gleichen Kriterien wie das Softwaremodul des vorhergehenden Verarbeitungsabschnitts ermittelt, nämlich die Anzahl der insgesamt verarbeiteten Datensätze und die Summe der Beträge aller Überweisungen ins Ausland. Diese Informationen signalisiert es an das Kontrollsystem 8. Die vergleicht nun die von dem Softwaremodul 14 signalisierten Informationen mit den vom Softwaremodul Geschäfte/Positionen 16 signalisierten.

Falls nun das Kontrollsystem 8 feststellt, dass die Informationen über die insgesamt verarbeiteten Datensätze oder die Summen voneinander abweichen oder die Abweichung der ermittelten Summenwerte eine vorbestimmte zulässige maximale Abweichung überschreiten, so bricht das Kontrollsystem 8 die weitere Verarbeitung der Daten ab. Die von dem Softwaremodul 14 erstellte und zur weiteren Verarbeitung durch das Softwaremodul Buchungssystem 15 vorgesehene und ebenso die von dem Softwaremodul Geschäfte/Positionen erstellte und zur weiteren Verarbeitung durch das Softwaremodul Pricing 18 vorgesehenen Dateien werden nicht zur Verarbeitung freigegeben. Auf diese Weise wird die Ausbreitung des Fehlers verhindert. Das Kontrollsystem PCP 8 ist damit im übertragenen Sinne ein zentrale Überwachungsstelle mit der Funktion einer Schleuse, die beim Überschreiten der festgelegten zulässige maximalen Abweichungen die Schleuse für die Daten schließt, so dass die aus den Softwaremodulen gebildete Verarbeitungskette unterbrochen ist.

Im Folgenden wird angenommen, dass die Anwendung PCP 8 keine unzulässige Abweichung festgestellt hätte und die Verarbeitung fortgesetzt würde.

Die von dem Softwaremodul Geschäfte/Positionen 16 erstellte Ausgangsdatei ist die Eingangsdatei des Softwaremoduls Pricing 18 des nächsten Verarbeitungsabschnitts. In diesem Softwaremodul wird für jeden Datensatz der Eingangsdatei, also für jeden Geschäftsvorgang, ermittelt, welche Bankgebühren hierfür jeweils anfallen. Das Softwaremodul. Pricing 18 erstellt eine entsprechende Ausgangsdatei, die als Eingangsdatei für das Softwaremodul Buchungssystem 15 vorgesehen ist. Während seines Laufs hat auch das Softwaremodul Pricing 18 Informationen über die Anzahl der verarbeiteten Datensätze gesammelt. Diese Information signalisiert es an das Kontrollsystem 8, das diese Information mit derjenigen vergleicht, die die zuvor gelaufenen Softwaremodule Accounting Feeder 14 und Geschäfte/Positionen 16 an das Kontrollsystem PCP 8 signalisiert haben. Sofern keine Abweichung festgestellt bzw. die festgestellte Abweichung die zulässige maximale Abweichung nicht überschreitet, wird die weitere Verarbeitung nicht verhindert.

Das Kontrollsystem PCP 8 vergleicht somit nach jedem weiteren Verarbeitungsabschnitt die von den jeweiligen Softwaremodulen signalisierten Kontrollwerte. Falls bei einem solchen Vergleich die zulässige maximale Abweichung überschritten wird, so wird dies als Fehler erkannt. Die weitere Verarbeitung der jeweiligen Daten wird unterbunden und es wird eine lawinenartige Ausbreitung des Fehlers verhindert.

Die einzelnen Softwaremodule der Verarbeitungsabschnitte laufen nicht permanent, sondern werden von einem hier nicht dargestellten so genannten Scheduler-Programm erst dann gestartet, wenn die jeweilige Eingangsdatei zur Verarbeitung bereitgestellt wurde. Das Scheduler-Programm läuft permanent und startet in Abhängigkeit verschiedener Ereignisse die Softwaremodule der Verarbeitungsabschnitte. So wird beispielsweise das Softwaremodul Accounting Feeder 14 des ersten Verarbeitungsabschnitts erst dann gestartet, wenn um 17:00 Uhr die erste Datei auf das System SSP 11 transferiert wurde. Jeder Prozess eines Softwaremoduls oder in besonderen Fällen das Betriebssystem des Großrechners, liefert am Ende der Laufs des Prozesses einen Fehlercode an den Scheduler, so dass diesem signalisiert wird, ob der Prozesslauf des Softwaremoduls erfolgreich war oder nicht. Falls ein an den Scheduler signalisierter Fehlercode die nicht planmäßige und vorzeitige Beendigung eines Prozesses oder einen während der Verarbeitung aufgetretenen Fehler indiziert, so wird von dem Scheduler das Softwaremodul des nächsten Verarbeitungsabschnitts nicht gestartet, da durch den indizierten Fehler schon vor dem Start feststeht, dass der folgende Programmlauf nicht fehlerfrei sein wird.

Ein Softwaremodul eines nächsten Verarbeitungsabschnitts wird von dem Scheduler ebenfalls dann nicht gestartet, wenn bei dem Vergleich der gelieferten Kontrollwerte das Kontrollsystem PCP 8 ein Überschreiten einer zulässige maximalen Abweichung feststellt und damit die weitere Verarbeitung unterbunden werden muss. Ein solches Unterbinden der Verarbeitung einer Datei oder ggf. mehrerer korrelierter Dateien erfolgt dadurch, dass nur für die betroffenen Dateien die Softwaremodule des entsprechend nächsten Verarbeitungsabschnitts nicht gestartet werden. Wie auf jedem Multitasking fähigen Rechnersystem können jedoch von einem Softwaremodul, welches als ausführbare Datei nur einmal vorhanden sein muss, zu gleicher Zeit mehrere Prozesse laufen, die jeweils verschiedene Eingangsdateien verarbeiten. Demzufolge kann die Verarbeitung einer bestimmten Datei oder mehrerer bestimmter Dateien angehalten oder nicht gestartet werden, ohne dass dies andere, zeitgleich laufende Prozesse desselben Softwaremoduls und damit die Verarbeitung anderer Dateien berührt.

## Patentansprüche

1. Verfahren zur Steuerung von datenverarbeitenden Softwaremodulen (4, 5, 6, 7), wobei die zu verarbeitenden Daten in Dateien von Datensätzen organisiert sind, und wobei die Verarbeitung in mehreren aufeinander folgenden Verarbeitungsabschnitten stattfindet und die Dateien in einem Verarbeitungsabschnitt jeweils von mindestens einem Softwaremodul (4, 5, 6, 7) verarbeitet werden,
**dadurch gekennzeichnet,**
**dass** in dem mindestens einen Softwaremodul (4, 5, 6, 7) eines Verarbeitungsabschnitts Informationen über die verarbeiteten Daten erfasst und an ein Kontrollsystem (8) signalisiert werden, und
**dass** das Kontrollsystem (8) die von den Softwaremodulen (4, 5, 6, 7) der verschiedenen Verarbeitungsabschnitte signalisierten Informationen vergleicht und die Verarbeitung der Daten in einem nachfolgenden Verarbeitungsabschnitt vorausschauend unterbindet, wenn das Überschreiten einer vorbestimmten zulässigen maximalen Abweichung festgestellt wurde.

2. Verfahren nach Anspruch 1, **dadurch gekennzeichnet,**
**dass** die von den Softwaremodulen (4, 5, 6, 7) einer Verarbeitungsstufe zu verarbeitenden Daten in mehreren Dateien abgelegt sind, wobei die Informationen der Dateien miteinander korreliert sind.

3. Verfahren nach einem der vorhergehenden Ansprüche, **dadurch gekennzeichnet, dass** die Softwaremodule (4, 5, 6, 7) eines Verarbeitungsabschnitts unabhängig voneinander zeitgleich ablaufen.

4. Verfahren nach einem der vorhergehenden Ansprüche, **dadurch gekennzeichnet, dass** das Kontrollsystem (8) eine für eine Bedienperson akustische und/oder optische Alarmmeldung erzeugt.

5. Verfahren nach einem der vorhergehenden Ansprüche, **dadurch gekennzeichnet, dass** die Verarbeitung der Daten von dem Kontrollsystem (8) für einen Teil des nachfolgenden Verarbeitungsabschnitts dann zugelassen wird, wenn die festgestellte Abweichung für den Teil des nachfolgenden Verarbeitungsabschnitts unbedeutend ist.

6. Verfahren nach einem der vorhergehenden Ansprüche, **dadurch gekennzeichnet, dass** in den Softwaremodulen (4, 5, 6, 7) eines Verarbeitungsabschnitts eine bankfachlich gebildete Kennzahl, insbesondere Summe, ermittelt und an das Kontrollsystem (8) signalisiert wird und die zulässige maximale Abweichung auf diese Kennzahl, insbesondere Summe, bezogen ist.

7. Verfahren nach Anspruch 6, **dadurch gekennzeichnet, dass** die für eine bankfachlich gebildete Kennzahl, insbesondere Summe, zulässige maximale Abweichung als relative Abweichung festgelegt wird.

8. Verfahren nach Anspruch 6, **dadurch gekennzeichnet, dass** für eine bankfachlich gebildete Kennzahl, insbesondere Summe, die zulässige maximale Abweichung als absoluter Betrag festgelegt wird.

9. Verfahren nach einem der vorhergehenden Ansprüche, **dadurch gekennzeichnet, dass** in den Softwaremodulen (4, 5, 6, 7) der Verarbeitungsabschnitte die Anzahl bestimmter durchgeführter Verarbeitungsschritte, insbesondere die Anzahl verarbeiteter Datensätze erfasst und als Kontrollwert an das Kontrollsystem (8) signalisiert wird.

10. Verfahren nach einem der vorhergehenden Ansprüche, **dadurch gekennzeichnet, dass** für die Abarbeitung einer Anzahl von Datensätzen die von den Softwaremodulen (4, 5, 6, 7) benötigte Zeit, insbesondere die Zeitdauer zwischen Beginn und Ende der Abarbeitung, als Kontrollwert erfasst und an das Kontrollsystem (8) signalisiert wird.

11. Verfahren nach einem der vorhergehenden Ansprüche, **dadurch gekennzeichnet, dass** die Softwaremodule (4, 5, 6, 7) der Verarbeitungsstufen von einem permanent laufenden Scheduler-Programm gestartet werden, dem von den gestarteten Softwaremodulen (4, 5, 6, 7) am Ende ihres Laufs eine Information über den Erfolg der Verarbeitung signalisiert wird und dass das Scheduler-Programm die Softwaremodule (4, 5, 6, 7) des folgenden Verarbeitungsabschnitts nur startet, falls das gestartete Softwaremodul (4, 5, 6, 7) den Erfolg der Verarbeitung signalisiert und eine Prüfung der an das Kontrollsystem (8) signalisierten Informationen, insbesondere Kontrollwerte das Unterschreiten der zulässigen maximalen Abweichung ergibt.

12. Verfahren nach einem der vorhergehenden Ansprüche, **dadurch gekennzeichnet, dass** die Verarbeitung zusätzlich in mehreren, insbesondere mehr als zehn oder fünfzig parallelen Verarbeitungsabschnitten stattfindet.

13. Verfahren nach einem der vorhergehenden Ansprüche, **dadurch gekennzeichnet, dass** die Verarbeitung in mehr als fünf oder zehn aufeinander folgenden, unabhängigen Verarbeitungsabschnitten stattfindet.

14. Verfahren nach einem der vorhergehenden Ansprüche, **dadurch gekennzeichnet, dass** die Datensätze in Files, Datenbanken oder Queues abgelegt sind.

15. Computer-Programm mit Programm-Code-Mitteln zum Durchführen der in einem der vorhergehenden Ansprüche angegebenen Verfahrensschritte, wenn das Programm auf einem Computer ausgeführt wird.

16. Computer-Programm mit Programm-Code-Mitteln nach Anspruch 15, welches auf einem computerlesbaren Speichermedium gespeichert ist.
